# EUROPÄISCHE PATENTSCHRIFT

(11) **EP 2 481 650 B1**
(45) Veröffentlichungstag und Bekanntmachung des Hinweises auf die Patenterteilung: **24.09.2014**
(21) Anmeldenummer: 11010150.8
(22) Anmeldetag: 22.12.2011
(51) Int. Cl.: B60W 30/16, B60W 30/165, B60W 50/06

(54) **Verfahren zum Betrieb eines längsführenden Fahrerassistenzsystems eines Kraftfahrzeugs und Kraftfahrzeug**
Method for operating a longitudinally guiding driver assistance system of a motor vehicle and motor vehicle
Procédé d'actuation d'un système d'assistance au conducteur pour la guidance longitudinal d'un véhicule automobile et véhicule automobile

(30) Priorität: 26.01.2011 DE 102011009483
(43) Veröffentlichungstag der Anmeldung: 01.08.2012
(73) Patentinhaber: Audi AG, 85045 Ingolstadt (DE)
(72) Erfinder: Holzmann, Manfred, 91171 Greding (DE); Staudte, Carmen, 85080 Gaimersheim (DE)
(74) Vertreter: Thielmann, Frank

(56) Entgegenhaltungen:
- EP-A1- 2 251 240
- DE-A1-102005 026 065
- DE-A1-102008 036 131

## Beschreibung

Die Erfindung betrifft ein Verfahren zum Betrieb eines längsführenden Fahrerassistenzsystems eines Kraftfahrzeugs, insbesondere eines ACC-Systems, sowie ein Kraftfahrzeug.

Längsführende Fahrerassistenzsysteme sind seit einiger Zeit für Kraftfahrzeuge bekannt. Sie regeln anhand geeigneter Brems- und Beschleunigungseingriffe den Abstand, meist in Form einer Zeitlücke, auf ein voranfahrendes Kraftfahrzeug. Der bekannteste Vertreter solcher auch als Abstandsregelsysteme bezeichneten Fahrerassistenzsysteme sind die sogenannten ACC-Systeme (adaptive cruise control). Gemein haben derartige Systeme, dass über wenigstens einen Sensor, insbesondere einen Radarsensor und/oder eine Videokamera, Informationen über den Abstand und die Geschwindigkeit eines unmittelbar voranfahrenden Kraftfahrzeugs gewonnen werden, auf denen dann die Abstandsregelung basiert. Bei ACC-Systemen ist diese Funktionalität kombiniert mit einer Geschwindigkeitsregelautomatik

EP 2 251 240 A1 offenbart ein Verfahren zum Betrieb eines längsführenden Fahrerassistenzsystems eines Kraftfahrzeugs, wobei Umgebungsdaten des Kraftfahrzeugs bezüglich einer vorliegenden Kolonnenfahrt mit wenigstens drei, das Kraftfahrzeug und wenigstens zwei weitere Kraftfahrzeuge umfassenden, unmittelbar hintereinander fahrenden Kraftfahrzeugen zu einem Kolonnenwert ausgewertet werden und wenigstens ein Betriebsparameter des Fahrerassistenzsystems abhängig von dem Kolonnenwert angepasst wird.

Fahren mehrere Kraftfahrzeuge, die allesamt mit einem längsführenden Fahrerassistenzsystem, insbesondere einem ACC-System, ausgestattet sind, in einer Kolonne hintereinander her, kann es insbesondere im niedrigen Geschwindigkeitsbereich, beispielsweise im Stop-and-Go-Verkehr, insbesondere im Stadtverkehr, zu Problemen kommen. Zwar ist davon auszugehen, dass die ersten beiden aufeinander folgenden Kraftfahrzeuge mit aktivem Fahrerassistenzsystem noch harmonisch geregelt hintereinander herfahren, aber bereits ab einem dritten Kraftfahrzeug die Längsführung nicht mehr einwandfrei funktionieren kann.

Vor allem bei Verzögerungsphasen bis zum Stillstand, beispielsweise vor einer roten Ampel, können, nachdem die genannten Probleme vorliegen, die Systemgrenzen des längsführenden Fahrerassistenzsystems überschritten werden, so dass ein manueller Eingriff erforderlich ist, wenn es dem Fahrerassistenzsystem nicht mehr gelingt, eine funktionierende Längsregelung zu gewährleisten. Aber auch in einem typischen Niedriggeschwindigkeitsbetrieb, insbesondere einem Stop-and-Go-Betrieb, kann es im Falle einer Längsführungs-Kolonnenfahrt zu einem "Schwingen" der Regelung kommen, so dass eine Art Ziehharmonika-Effekt und damit eine ineffiziente Fahrweise (starkes Beschleunigen und starkes Abbremsen) auftreten. In diesem Fall ist eine Kolonnenstabilität aktueller längsführender Fahrerassistenzsysteme, insbesondere von ACC-Systemen, nicht gewährleistet.

Ursachen für diese ungewünschten Effekte liegen beispielsweise in den Verzugszeiten der Sensorik und der Aktuatorik und in den Zeitkonstanten der Längsführung (Längsregelung), beispielsweise eingestellten vorbestimmten oder innerhalb eines vorbestimmten Bereichs liegenden Gradienten der Geschwindigkeit und dergleichen. Verzüge im Sensorbereich basieren meistens auf der Art der Auswertung, wenn beispielsweise zuerst Daten plausibilisiert werden oder anderweitig der Sicherheit der Detektion zuträgliche Schwellen überwunden werden müssen. Die Zeitkonstanten der Längsregelung eines längsführenden Fahrerassistenzsystems werden vor allem unter dem Gesichtspunkt des Fahrkomforts im Hinblick auf übliche und häufige Verkehrssituationen parametriert.

Zwar gibt es auch in Kolonnen, bei denen die Fahrzeuge von menschlichen Fahrern betrieben werden, zeitliche Verzüge und Zeitkonstanten, diese sind aber bei weitem nicht so ausgeprägt, weil ein Mensch in der Regel wesentlich vorausschauender erkennt, bewertet, umsetzt und damit letztendlich fährt, als es mit aktuellen Fahrerassistenzsystemen möglich ist. Zudem ist es weitaus unwahrscheinlicher, dass es zu einem "Aufschaukeln" bereits in kurzen Kolonnen kommt, nachdem sich die Zeitverzüge und Zeitkonstanten letztlich auch nicht entsprechen.

Der Erfindung liegt daher die Aufgabe zugrunde, ein Steuerungsverfahren anzugeben, welches während einer Kolonnenfahrt auftretende Probleme eines längsführenden Fahrerassistenzsystems reduziert, insbesondere gänzlich vermeidet.

Zur Lösung dieser Aufgabe ist bei einem Verfahren der eingangs genannten Art erfindungsgemäß vorgesehen, dass Umgebungsdaten des Kraftfahrzeugs bezüglich einer vorliegenden Längsführungs-Kolonnenfahrt mit wenigstens drei das Kraftfahrzeug und wenigstens zwei weitere Kraftfahrzeuge umfassenden, unmittelbar hintereinander fahrenden, jeweils ein aktives längsführendes Fahrerassistenzsystem aufweisenden Kraftfahrzeugen zu einem Kolonnenwert ausgewertet werden, wobei überprüft wird, ob wenigstens zwei dem Kraftfahrzeug unmittelbar vorausfahrende Kraftfahrzeuge selbst ein aktives längsführendes Fahrerassistenzsystem aufweisen, und wenigstens ein Betriebsparameter des Fahrerassistenzsystems abhängig von dem Kolonnenwert angepasst wird.

Die Erfindung schlägt also vor, die spezielle Situation einer Kolonne bestehend aus mindestens drei Kraftfahrzeugen mit aktiv betriebenen längsführenden Fahrerassistenzsystemen, insbesondere ACC-Systemen, zu erkennen und durch eine geeignete situationsangepasste Umparametrierung der Längsregelung, Sensorik und/oder Aktuatorik dafür zu sorgen, dass die spezielle Situation der Kolonnenfahrt beherrscht und somit ein Eingreifen des Fahrers nicht notwendig wird, das bedeutet, möglichst innerhalb der Systemgrenzen des längsführenden Fahrerassistenzsystems zu bleiben. Insbesondere interessant ist dabei der Fall, dass eine Längsführungs-Kolonnenfahrt mit wenigstens zwei dem Kraftfahrzeug unmittelbar voranfahrenden, ebenfalls ein aktives längsführendes Fahrerassistenzsystem aufweisenden weiteren Kraftfahrzeugen vorliegt. Wird das erfindungsgemäße Verfahren mithin eingeschränkt auf solche Fälle, in denen wenigstens zwei Kraftfahrzeuge mit aktiven Fahrerassistenzsystemen noch vor dem eigenen Kraftfahrzeug fahren, so ist bei den ersten beiden Kraftfahrzeugen einer Längsführungs-Kolonne noch keine Parameteranpassung notwendig.

Insgesamt wird also vorgeschlagen, die Betriebsstrategie für das Fahrerassistenzsystem so zu wählen, dass es auch in Längsführungs-Kolonnenfahrten innerhalb seiner Systemgrenzen weiter betrieben werden kann, wobei gegebenenfalls der für den Fahrer übliche Komfort der Längsführung eingeschränkt werden muss, worauf im Folgenden noch näher eingegangen werden wird. Hier liegt die Erkenntnis zugrunde, dass es für den Fahrer weitaus unkomfortabler wäre, manuell eingreifen zu müssen.

Dabei kann vorgesehen sein, dass das erfindungsgemäße Verfahren nur bei einer einen vorbestimmten Grenzwert unterschreitenden Geschwindigkeit des Kraftfahrzeugs eingesetzt wird, insbesondere bei Geschwindigkeiten 50 km/h, da bei den niedrigen Geschwindigkeiten, insbesondere im Stop-and-Go-Verkehr, am häufigsten Probleme auftreten können. Auf diese Weise können Geschwindigkeitsbereiche, in denen auch bei Verwendung der normalen Betriebsparameter keinerlei Probleme bei Kolonnenfahrten auftreten, ausgeklammert werden, um gegebenenfalls auftretende Komforteinbußen so gering wie möglich zu halten.

Das erfindungsgemäße Verfahren erlaubt also vorteilhafterweise die Beherrschung der speziellen Situation der Längsführungs-Kolonnenfahrt, so dass der Fahrer nicht gezwungen wird, manuell einzugreifen. Insgesamt wird das Fahrerassistenzsystem, insbesondere das ACC-System, als vorausschauender empfunden, auch wenn in einigen Fahrsituationen eine, wenn auch geringe, Komforteinbuße hingenommen werden muss.

In einer einfachen Ausgestaltung der vorliegenden Erfindung kann vorgesehen sein, dass der Kolonnenwert letztlich eine binäre Aussage darüber enthält, ob in einer Längsführungs-Kolonne gefahren wird (und gegebenenfalls an welcher Position) oder nicht. Allgemein kann es jedoch selbstverständlich auch zweckmäßig sein, bei der Anpassung der Parameter weitere Faktoren zu berücksichtigen, die im Kolonnenwert abgebildet werden können oder als weitere Parameter mit eingehen können. Beispielsweise könnten Anpassungen abhängig von der mittleren Geschwindigkeiten der Kolonne, der Zahl der Kraftfahrzeuge in der Kolonne, der Position in der Kolonne und dergleichen erfolgen.

In zweckmäßiger Ausgestaltung der vorliegenden Erfindung kann vorgesehen sein, dass bei einer festgestellten Längsführungs-Kolonnenfahrt der wenigstens eine Betriebsparameter zur Reduzierung einer Reaktionszeit des Fahrerassistenzsystems auf das Verhalten des dem Kraftfahrzeug unmittelbar voranfahrenden Kraftfahrzeugs angepasst wird. In dieser Ausgestaltung ist es also hauptsächlich, Verzugszeiten und Zeitkonstanten zu minimieren. Dadurch, dass das Fahrerassistenzsystem schneller reagieren kann, wird ein Aufschaukeln bzw. ein Aufsummieren der Reaktionszeitdauern vermieden oder zumindest vermindert, so dass eine verbesserte Kolonnenfahrt möglich ist.

Konkret kann dabei vorgesehen sein, dass durch die Anpassung des Betriebsparameters eine straffere Abstandsregelung als außerhalb einer Längsführungs-Kolonnenfahrt erfolgt. Dies kann gegebenenfalls zu Lasten einer komfortablen und weichen Abstandsregelung erfolgen und ist letztlich ein Komfortaspekt. Hierbei werden beispielsweise frühere Eingriffszeitpunkte bei der Längsführung dienenden Fahreingriffen ermöglicht, indem die Algorithmik des Fahrerassistenzsystems entsprechend umparametriert wird.

Ferner kann vorgesehen sein, dass durch die Anpassung des Betriebsparameters eine maximal erlaubte Bremsverzögerung erhöht wird. Häufig ist eine maximale Bremsverzögerung im Normalbetrieb des Fahrerassistenzsystems vorgesehen, die Komfortkriterien Rechnung trägt. Diese Begrenzung kann nun im speziellen Fall der Längsführungs-Kolonnenfahrt verschoben werden, so dass durch gegebenenfalls härtere Bremseingriffe Systemgrenzen weniger schnell erreicht werden und die Zeitdauer für die Reaktionsaktion insgesamt verkürzt werden kann.

Denkbar ist ferner, dass eine schnellere Beurteilung der aktuellen Fahrsituation ermöglicht wird, insbesondere durch eine Beschleunigung der Filterung von Messdaten. Auf diese Weise werden also Betriebsparameter angepasst, so dass eine frühere Zielerkennung und Situationsbewertung ermöglicht ist, was gegebenenfalls zu Lasten einer zuverlässigen Zielerkennung und Situationsbewertung erfolgen kann. Dabei sollten die Parameter so verändert werden, dass ein Problem/Hindernis/Ziel gegebenenfalls eher fehlerhaft zu früh erkannt werden kann, jedoch das Risiko gering bleibt, dass eine Nichterkennung oder dergleichen erfolgt. Beispielsweise ist es hier möglich, die Filterung für gemessene Zustandsgrößen des voranfahrenden Kraftfahrzeugs aufzuweichen/schneller durchführbar zu machen. So werden Verzugszeiten weiter verkürzt.

Zweckmäßigerweise ist es auch denkbar, dass durch die Anpassung des Betriebsparameters eine elektronische Deichsel realisiert wird. Eine derartige Anpassung, die den Gedanken einer sogenannten elektronischen Deichsel umsetzt, versucht, das Verhalten des direkt vorausfahrenden durch intelligente Prädiktion der Fahrzeugkenngrößen des Regel- bzw. Zielobjektes umzusetzen. Dabei handelt es sich um einen besonders straffen Fall der bereits erwähnten Abstandsregelung, die zwar eine schnelle Reaktion mit äußert geringen Verzugszeiten und Zeitkonstanten ermöglicht, jedoch häufig zu Lasten des Komforts gehen kann.

In weiterer vorteilhafter Ausgestaltung der vorliegenden Erfindung kann vorgesehen sein, dass der Betriebsparameter im Hinblick auf ein schnelleres Ansprechen einer von dem Fahrerassistenzsystem angesprochenen Aktuatorik angepasst wird, insbesondere durch Entfall oder Erniedrigung von Ruckbegrenzungen und/oder Ermöglichung eines schnelleren Druckaufbaus in einem ESP-System. Dabei ist es insbesondere möglich, beispielsweise bei einer Schnittstelle, Betriebsparameter der entsprechenden Aktuatorik selbst zu verändern, wenn diese Aktuatorik auf die Funktion des Fahrerassistenzsystems einen Einfluss hat. Ein Beispiel hierfür ist der Entfall von Ruckbegrenzungen, also Begrenzungen der zeitlichen Änderung der Beschleunigung des Kraftfahrzeugs. Eine andere, zusätzlich oder alternativ nutzbare, beispielhafte Möglichkeit ist eine entsprechende Konditionierung von Fahrwerksystemen, insbesondere eines ESP-Systems.

Zweckmäßigerweise kann auch vorgesehen sein, dass bei einer festgestellten Längsführungs-Kolonnenfahrt der wenigstens eine Betriebsparameter im Hinblick auf eine Erhöhung der eingestellten Zeitlücke und/oder eine Aufweitung eines eingestellten Zeitlückenintervalls angepasst wird. In diesem Zusammenhang ist es besonders vorteilhaft, wenn diese Erhöhung bzw. Aufweitung adaptiv je nach der Position des eigenen Kraftfahrzeugs in der Längsführungs-Kolonne adaptiv erfolgt. So ist es möglich, die Sicherheit bei gleichzeitig erhaltenem Komfort gegenüber aktuellen Systemen zu erhöhen, da letztlich der Handlungsspielraum des Fahrerassistenzsystems erhöht wird, nachdem ein sicherheitskritischer Abstand erst zu einem späteren Zeitpunkt erreicht wird.

Im erfindungsgemäßen Verfahren sind verschiedene Ansätze denkbar, um das Vorliegen einer Längsführungs-Kolonnenfahrt zu detektieren, die allesamt auch in Kombination verwendet werden können, beispielsweise im Rahmen einer gegenseitigen Plausibilisierung.

So kann beispielsweise vorgesehen sein, dass als Umgebungsdaten die absolute und/oder die relative Bewegung der wenigstens zwei voranfahrenden Kraftfahrzeuge und des eigenen Kraftfahrzeugs beschreibende Dynamikdaten ausgewertet werden. Es werden also charakteristische Kenngrößen der Bewegung des eigenen und der vorausfahrenden Kraftfahrzeuge und/oder charakteristische Kenngrößen der vorausfahrenden Kraftfahrzeuge und des eigenen Kraftfahrzeugs zueinander betrachtet, beispielsweise Relativbeschleunigungen und dergleichen. Die grundsätzliche Idee hierbei ist es, festzustellen, ob eine Bewegungskorrelation zwischen den Kraftfahrzeugen der aktuellen Kolonne besteht, die auf das Vorliegen einer maschinellen, automatisierten Steuerung durch ein längsführendes Fahrerassistenzsystem hinweist. Dabei können insbesondere verschiedene Bedingungen überprüft werden, gegebenenfalls auch im Rahmen einer Fuzzy-Logik. So kann vorgesehen sein, dass als Bedingung für das Vorliegen einer Längsführungs-Kolonnenfahrt Fälle betrachtet werden, in denen die Veränderung der Geschwindigkeit über die Zeit des eigenen Kraftfahrzeugs und der wenigstens zwei voranfahrenden Kraftfahrzeuge zwischen einem vorbestimmten Minimalwert und einem vorbestimmten Maximalwert liegt. Weitere derart mögliche Bedingungen, die überprüft werden können, sind, ob die Reaktionszeiten der Kraftfahrzeuge sich innerhalb eines Toleranzbereichs entsprechen und/oder die Verzögerung der Kraftfahrzeuge innerhalb der Kolonne absinkt und/oder ein drohender Abwurf der Funktion des Fahrerassistenzsystems bevorsteht. Insbesondere ist es also denkbar, durch die Abschätzung der Systemgrenzen bzw. deren Erreichen selber die Schlussfolgerung auf das Vorliegen einer Längsführungs-Kolonnenfahrt zu ziehen. Selbstverständlich sind hier auch andere Ansätze/Kriterien denkbar, um eine mögliche Bewegungskorrelation auffinden zu können.

In Fortbildung des Erfindungsgedankens können ferner als Umgebungsdaten empfangene Signale wenigstens eines dem Fahrerassistenzsystem zugeordneten Radarsensors auf das Vorhandensein weiterer längsführender Fahrerassistenzsysteme mit Radarsensoren ausgewertet werden, insbesondere mittels einer Hochfrequenzanalyse. Die Idee hierbei ist es, nicht nur die Reflexionen des eigenen ausgesandten Radarsignals auszuwerten, sondern auch die weiteren, nicht kohärent empfangenen Radarsignale. Beispielsweise kann eine Spektralanalyse durchgeführt werden, um herauszufinden, wie viele längsführende Fahrerassistenzsysteme mit Radarsensoren in der Umgebung des eigenen Kraftfahrzeugs zusätzlich vorhanden sind.

In weiterer vorteilhafter Ausgestaltung der Erfindung kann vorgesehen sein, dass als Umgebungsdaten Kommunikationsdaten einer zur Kommunikation mit anderen Kraftfahrzeugen ausgebildeten Kommunikationseinrichtung ausgewertet werden. Bei dieser Ausgestaltung wird also vorgeschlagen, car-tocar-Systeme oder allgemein car-to-x-Systeme zu nutzen, um weitergehende Informationen über Kraftfahrzeuge mit einem aktiven längsführenden Fahrerassistenzsystem in der Umgebung des eigenen Kraftfahrzeugs zu sammeln. Sendet beispielsweise ein anderes Kraftfahrzeug die Information, dass sein längsführendes Fahrerassistenzsystem aktiv ist, wo es sich befindet und in welche Richtung es fährt, kann bei einer umfassenden Ausstattung der Kraftfahrzeuge der Kolonne mit entsprechenden Kommunikationsmöglichkeiten ein einfacher Weg gegeben sein, eine Längsführungs-Kolonnenfahrt zu erkennen.

Denkbar ist es ferner, als Umgebungsdaten Bilddaten einer insbesondere dem Fahrerassistenzsystem zugeordneten Kamera auszuwerten, insbesondere im Hinblick auf das Aufleuchten von Bremsleuchten wenigstens eines voranfahrenden Kraftfahrzeugs. In dieser Ausgestaltung ist es beispielsweise möglich, zu überprüfen, ob das unmittelbar voranfahrende bzw., falls versetzt sichtbar, das vorvoranfahrende Kraftfahrzeug ein zyklisches Aufleuchten des Bremslichts oder dergleichen aufweist, welches in seinem Muster für die Aktivität eines längsführenden Fahrerassistenzsystems spricht. Auch Kamerainformationen können mithin genutzt werden.

Neben dem Verfahren betrifft die Erfindung noch ein Kraftfahrzeug, umfassend ein längsführendes Fahrerassistenzsystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, so dass auch hiermit die im Rahmen der vorliegenden Erfindung gewonnenen Vorteile erreicht werden können. Das Fahrerassistenzsystem kann dabei insbesondere ein ACC-System mit einer zugeordneten Kamera und/oder einen zugeordneten Radarsensor sein.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: einen Ablaufplan des erfindungsgemäßen Verfahrens,
- Fig. 3: das erfindungsgemäße Kraftfahrzeug in einer Längsführungs-Kolonne, und
- Fig. 4: eine mögliche Veränderung von Betriebsparametern.

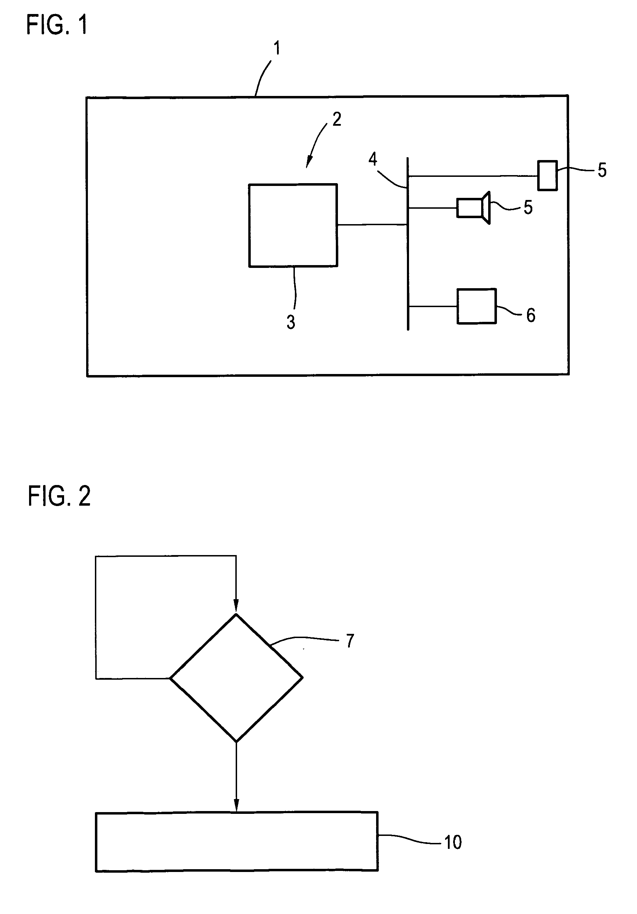

Fig. 1 zeigt eine Prinzipskizze eines erfindungsgemäßen Kraftfahrzeugs 1. Es umfasst ein längsführendes Fahrerassistenzsystem 2, dessen Betrieb über ein Steuergerät 3, welches zur Ausführung des erfindungsgemäßen Verfahrens ausgebildet ist, gesteuert wird. Über ein Bussystem 4, beispielsweise einen CAN-Bus, ist das Steuergerät 3 mit dem Fahrerassistenzsystem 2 zugeordneten Sensoren 5 verbunden, hier Radarsensoren und einer Kamera. Ferner können über das Bussystem 4 Aktuatoren 6 des Kraftfahrzeugs 1 angesprochen werden, die zur Durchführung der Fahreingriffe des längsführenden Fahrerassistenzsystems 2, welches hier im Übrigen als ACC-System ausgebildet ist, verwendet werden. Die Aktuatoren 6 können beispielsweise ein ESP-System und Motorkomponenten umfassen.

Selbstverständlich sind über das Bussystem 4 auch weitere, hier nicht näher dargestellte Fahrzeugsysteme erreichbar, beispielsweise Sensoren, die die Eigenbewegung des Kraftfahrzeugs 1 vermessen und dergleichen.

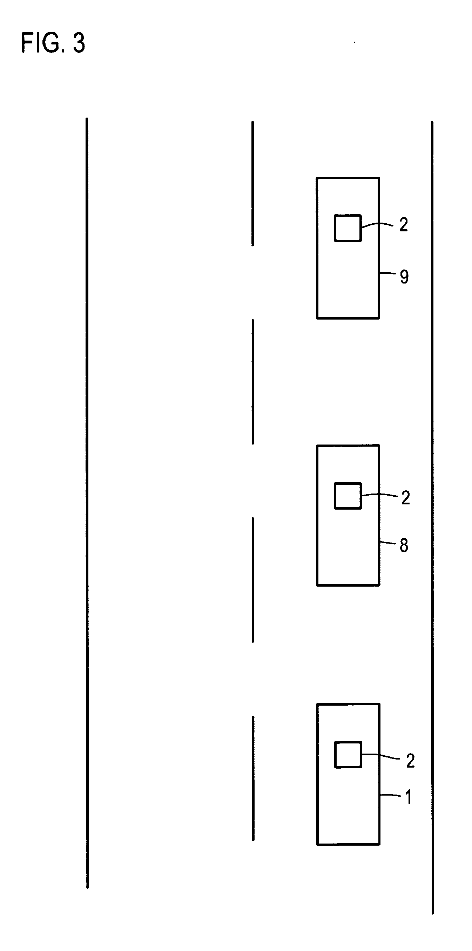

Das Steuergerät 3 ist nun zur Durchführung des erfindungsgemäßen Steuerungsverfahrens für ein derartiges Fahrerassistenzsystem 2 ausgebildet, welches im Wesentlichen überprüft, vgl. Schritt 7 in Fig. 2, ob das Fahrzeug gerade Teil einer Längsführungs-Kolonne ist, sich also in einer Längsführungs-Kolonnenfahrt befindet. In einer Längsführungs-Kolonne befinden sich wenigstens drei unmittelbar aufeinander folgende Kraftfahrzeuge, die allesamt ein aktives Fahrerassistenzsystem 2 aufweisen. Vorliegend wird zur Detektion des Vorliegens einer Längsführungs-Kolonnenfahrt mithin überprüft, ob die beiden unmittelbar vor dem eigenen Kraftfahrzeug 1 in der Kolonne fahrenden Kraftfahrzeuge 8, 9 (vgl. Fig. 3) selbst ein aktives Fahrerassistenzsystem 2 zur Längsführung aufweisen.

Zur konkreten Bestimmung eines Kolonnenwerts, der angibt, ob sich das Kraftfahrzeug 1 in einer Längsführungs-Kolonne befindet, gibt es nun mehrere Möglichkeiten, die vorteilhaft auch in Kombination eingesetzt werden können. So ist es denkbar, zu überprüfen, ob zwischen den Bewegungen der Kraftfahrzeuge 8, 9 und gegebenenfalls 1 eine Bewegungskorrelation vorliegt, die für das Vorhandensein eines aktiven längsführenden Fahrerassistenzsystems 2, letztlich also eine automatische Längsführung der Kraftfahrzeuge 8, 9, spricht. Beispielsweise können dabei verschiedene Kriterien betrachtet werden, die charakteristische Kenngrößen der Bewegung an korrelierten Bewegungsereignissen vergleichen. Bremst beispielsweise das Kraftfahrzeug 9 und kurz darauf das Kraftfahrzeug 8, so wird kurz darauf auch das eigene Kraftfahrzeug 1 bremsen. Hierbei kann dann beispielsweise als Kriterium überprüft werden, ob die zeitliche Änderung der Geschwindigkeit der Kraftfahrzeuge 9, 8 und 1 ähnlich ist und/oder zwischen einem vorbestimmten Minimalwert und einem vorbestimmten Maximalwert liegen. Auf ähnliche Art und Weise können beispielsweise die Zeiten betrachtet werden, die zwischen den einander entsprechenden Bewegungsereignissen liegen, beispielsweise kann überprüft werden, in welchem Abstand nacheinander die Kraftfahrzeuge 8, 9 und 1 jeweils bremsen. Sind diese Zeiten ähnlich, so spricht dies ebenso für das Vorliegen gleichartiger längsführender Fahrerassistenzsysteme 2. Überprüft werden können auch Zusammenhänge zwischen der eingesetzten Bremsverzögerung der aufeinander folgenden Kraftfahrzeuge, beispielsweise, ob die Bremsverzögerung des eigenen Kraftfahrzeugs 1 größer als eine minimale Bremsverzögerung ist, aber kleiner als die Bremsverzögerung des Kraftfahrzeugs 9, welche wiederum kleiner als die Bremsverzögerung des Kraftfahrzeugs 8 ist. Ersichtlich sind verschiedene Ansatzpunkte und Kriterien denkbar, die miteinander kombiniert werden können, um durch Vergleich miteinander korrelierter Bewegungsaktionen das Vorliegen einer Längsführungs-Kolonne festzustellen.

Eine weitere Möglichkeit, eine Kolonnenfahrt zu detektieren, besteht in der Auswertung empfangener Signale der Radarsensoren, die dem Fahrerassistenzsystem 2 zugeordnet sind. Diese können hochfrequenztechnisch analysiert werden, woraus das Vorhandensein weiterer Fahrerassistenzsysteme 2 mit einer Radarsensorik geschlussfolgert werden kann, da die Radarsignale dieser Fahrerassistenzsysteme 2 ja ebenso empfangen werden.

Eine weitere Möglichkeit ist gegeben, wenn das Kraftfahrzeug 1 eine in Fig. 1 nicht näher gezeigte Kommunikationseinrichtung, beispielsweise im Rahmen eines car-to-x-Systems, aufweist, mit der Kommunikationsdaten über Kraftfahrzeuge 8, 9 im Umfeld des Kraftfahrzeugs 1 empfangen werden können. Die Kraftfahrzeuge 8, 9 können, direkt oder indirekt, beispielsweise übermitteln, ob ihr Fahrerassistenzsystem 2 aktiv ist und wo sie sich genau befinden, so dass auf eine Längsführungs-Kolonnenfahrt rückgeschlossen werden kann.

Schließlich ist es auch denkbar, Videoinformationen der Kamera, letztlich also Bilddaten, auszuwerten, um beispielsweise eine zyklische Bremslichtansteuerung der vorausfahrenden Kraftfahrzeuge 8, 9 zu detektieren und entsprechend auf das Vorhandensein des aktiven Fahrerassistenzsystems 2 zu schließen.

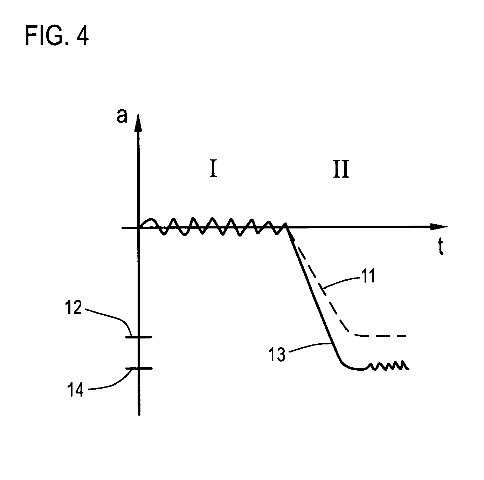

Eine, bevorzugt aber mehrere der hier dargestellten Möglichkeiten zur Detektion einer Längsführungs-Kolonnenfahrt wird mithin in dem Schritt 7 durchgeführt. Hieraus ergibt sich letztlich der Kolonnenwert, der, gegebenenfalls genauer aufgeschlüsselt, angibt, ob sich das Kraftfahrzeug tatsächlich in einer Längsführungs-Kolonne befindet. Ist dies der Fall, erfolgt in einem Schritt 10 (Fig. 2) eine Anpassung von Betriebsparametern des Fahrerassistenzsystems 2. Dabei erfolgen vorliegend mehrere Anpassungen, wobei beispielhaft erläuternd Fig. 4 betrachtet werden soll.

Fig. 4 betrachtet zwei mögliche Anpassungen von Betriebsparametern des Fahrerassistenzsystems 2, die zu einer Reduzierung einer Reaktionszeit des Fahrerassistenzsystems 2 auf das Verhalten des dem Kraftfahrzeug 1 unmittelbar voranfahrenden Kraftfahrzeugs 8 führt. Aufgetragen ist die aktuelle Beschleunigung a des Kraftfahrzeugs 1 gegen die Zeit t. Am Ende des Bereichs I, in dem eine einfache Regelung auf eine konstante, gewünschte Geschwindigkeit erfolgt, soll nun auf das voranfahrende Kraftfahrzeug 8 gebremst werden. Die gestrichelte Kurve 11 zeigt dabei den Beschleunigungsverlauf beim normalen Betrieb des Fahrerassistenzsystems 2. Ersichtlich wird ein bestimmter Gradient verwendet, anhand dessen die Beschleunigung bis auf eine Maximalbremsverzögerung 12 absinkt. Um eine straffere ("härtere") und effektivere Abstandsregelung im Fall einer Längsführungs-Kolonnenfahrt zu erreichen, ist nun, wie aus der Kurve 13 ersichtlich, im Fall einer Längsführungs-Kolonnenfahrt ein steilerer Gradient möglich. Zudem ist die maximal mögliche Bremsverzögerung 14 erhöht. Da somit ein größerer Aktionsspielraum für das Fahrerassistenzsystem 2 existiert, können durch schnellere Reaktionen zum einen Effekte in einer Längsführungs-Kolonne vermieden werden, zum anderen kann solchen Effekten auch durch entsprechend modifizierte Eingriffe entgegengewirkt werden.

Durch weitere Betriebsparameteranpassungen kann die Tauglichkeit des Fahrerassistenzsystems für Längsführungs-Kolonnenfahrten weiter verbessert werden. So können auch im Bereich der Datenerfassung und Datenauswertung Optimierungen vorgenommen werden. Beispielsweise können Betriebsparameter geändert werden, die zu einer früheren Zielerkennung und Situationsbewertung führen, so insbesondere Filter für Umfelddaten oder dergleichen. Besonders vorteilhaft ist es auch, wenn ein schnelleres Ansprechen der Aktuatoren 6 ermöglicht wird. Hier können beispielsweise Ruckbegrenzungen erniedrigt werden/wegfallen oder Betriebsparameter eines ESP-Systems können angepasst werden, beispielsweise, indem ein schnellerer Aufbau des Bremsdrucks ermöglicht wird.

Äußerst zweckmäßig ist es auch, die eingestellte Zeitlücke aufzuweiten, das bedeutet, beispielsweise einen größeren Toleranzbereich zu erlauben, so dass der Spielraum des Fahrerassistenzsystems 2 insgesamt erhöht wird. Auch eine einfache Erhöhung der Zeitlücke ist denkbar, nachdem sich dann ein größerer Spielraum ergibt, bevor kritische Zeitlücken erreicht werden. Bei dieser Anpassung wird zudem berücksichtigt, welche Position das Kraftfahrzeug 1 in der Längsführungs-Kolonne inne hat.

Diese Anpassungen finden insgesamt in Schritt 10 statt, wobei an dieser Stelle nochmals deutlich hervorgehoben sein soll, dass, wie ja bereits bezüglich der Aufweitung/Erhöhung der Zeitlücke dargelegt wurde, der Kolonnenwert auch nicht binär bestimmt werden kann bzw. weitere Größen berücksichtigt werden können, um die tatsächliche Anpassung der Betriebsparameter abgestimmt auf die aktuelle Fahrsituation zu ermöglichen.

Schließlich sei noch angemerkt, dass in dieser Ausführungsform des erfindungsgemäßen Verfahrens vorgesehen sein kann, dass die Überprüfung in Schritt 7 nur dann stattfindet, wenn die Geschwindigkeit des Kraftfahrzeugs 1 kleiner als eine vorbestimmte Geschwindigkeit, beispielsweise 50 km/h, ist. Dann sind Anpassungen der Betriebsparameter und damit gegebenenfalls verbundene Komforteinschränkungen nur dann vorzunehmen, wenn sie tatsächlich notwendig sind.

## Patentansprüche

1. Verfahren zum Betrieb eines längsführenden Fahrerassistenzsystems eines Kraftfahrzeugs, insbesondere eines ACC-Systems,
**dadurch gekennzeichnet,**
**dass** Umgebungsdaten des Kraftfahrzeugs bezüglich einer vorliegenden Längsführungs-Kolonnenfahrt mit wenigstens drei das Kraftfahrzeug und wenigstens zwei weitere Kraftfahrzeuge umfassenden, unmittelbar hintereinander fahrenden, jeweils ein aktives längsführendes Fahrerassistenzsystem aufweisenden Kraftfahrzeugen zu einem Kolonnenwert ausgewertet werden, wobei überprüft wird, ob wenigstens zwei dem Kraftfahrzeug unmittelbar vorausfahrende Kraftfahrzeuge selbst ein aktives längsführendes Fahrerassistenzsystem aufweisen, und wenigstens ein Betriebsparameter des Fahrerassistenzsystems abhängig von dem Kolonnenwert angepasst wird.

2. Verfahren nach Anspruch 1,
**dadurch gekennzeichnet,**
**dass** bei einer festgestellten Längsführungs-Kolonnenfahrt der wenigstens eine Betriebsparameter zur Reduzierung einer Reaktionszeit des Fahrerassistenzsystems auf das Verhalten des dem Kraftfahrzeug unmittelbar voranfahrenden Kraftfahrzeugs angepasst wird.

3. Verfahren nach Anspruch 2,
**dadurch gekennzeichnet,**
**dass** durch die Anpassung des Betriebsparameters eine straffere Abstandsregelung als außerhalb einer Längsführungs-Kolonnenfahrt erfolgt und/oder eine maximal erlaubte Bremsverzögerung erhöht wird und/oder eine schnellere Beurteilung der aktuellen Fahrsituation ermöglicht wird, insbesondere durch eine Beschleunigung der Filterung von Messdaten, und/oder eine elektronische Deichsel realisiert wird.

4. Verfahren nach Anspruch 2 oder 3,
**dadurch gekennzeichnet,**
**dass** der Betriebsparameter im Hinblick auf ein schnelleres Ansprechen einer von dem Fahrerassistenzsystem angesprochenen Aktuatorik angepasst wird, insbesondere durch Entfall oder Erniedrigung von Ruckbegrenzungen und/oder Ermöglichung eines schnelleren Druckaufbaus in einem ESP-System.

5. Verfahren nach einem der vorangehenden Ansprüche,
**dadurch gekennzeichnet,**
**dass** bei einer festgestellten Längsführungs-Kolonnenfahrt der wenigstens eine Betriebsparameter im Hinblick auf eine Erhöhung der eingestellten Zeitlücke und/oder eine Aufweitung eines eingestellten Zeitlückenintervalls angepasst wird.

6. Verfahren nach einem der vorangehenden Ansprüche,
**dadurch gekennzeichnet,**
**dass** als Umgebungsdaten die absolute und/oder die relative Bewegung der wenigstens zwei voranfahrenden Kraftfahrzeuge und des eigenen Kraftfahrzeugs beschreibende Dynamikdaten ausgewertet werden.

7. Verfahren nach Anspruch 6,
**dadurch gekennzeichnet,**
**dass** als Bedingung für das Vorliegen einer Längsführungs-Kolonnenfahrt Fälle betrachtet werden, in denen die Veränderung der Geschwindigkeit über die Zeit des eigenen Kraftfahrzeugs und der wenigstens zwei voranfahrenden Kraftfahrzeuge zwischen einem vorbestimmten Minimalwert und einem vorbestimmten Maximalwert liegt und/oder die Reaktionszeiten der Kraftfahrzeuge sich innerhalb eines Toleranzbereichs entsprechen und/oder die Verzögerung der Kraftfahrzeuge innerhalb der Kolonne absinkt und/oder ein drohender Abwurf der Funktion des Fahrerassistenzsystems bevorsteht.

8. Verfahren nach einem der vorangehenden Ansprüche,
**dadurch gekennzeichnet,**
**dass** als Umgebungsdaten empfangene Signale wenigstens eines dem Fahrerassistenzsystem zugeordneten Radarsensors auf das Vorhandensein weiterer längsführender Fahrerassistenzsysteme mit Radarsensoren ausgewertet werden, insbesondere mittels einer Hochfrequenzanalyse.

9. Verfahren nach einem der vorangehenden Ansprüche,
**dadurch gekennzeichnet,**
**dass** als Umgebungsdaten Kommunikationsdaten einer zur Kommunikation mit anderen Kraftfahrzeugen ausgebildeten Kommunikationseinrichtung ausgewertet werden.

10. Verfahren nach einem der vorangehenden Ansprüche,
**dadurch gekennzeichnet,**
**dass** als Umgebungsdaten Bilddaten einer insbesondere dem Fahrerassistenzsystem zugeordneten Kamera ausgewertet werden, insbesondere im Hinblick auf das Aufleuchten von Bremsleuchten wenigstens eines voranfahrenden Kraftfahrzeugs.

11. Kraftfahrzeug (1), umfassend ein längsführendes Fahrerassistenzsystem (2) mit einem Steuergerät (3) mit Mitteln zur Durchführung eines Verfahrens nach einem der vorangehenden Ansprüche.

## Claims

1. Method for operating a longitudinal-guidance driver assistance system in a motor car, particularly an ACC system,
**characterised in that**
environmental data of the motor car are evaluated, in relation to current travel in a longitudinal convoy with at least three cars including the original car and at least two additional cars driving directly behind one another, each having an active longitudinal-guidance driver assistance system, to obtain a convoy value, a check being made as to whether two cars driving immediately in front of the original car themselves have an active longitudinal-guidance driver assistance system, and at least one operating parameter of the driver assistance system is adapted as a function of the convoy value.

2. Method according to claim 1, **characterised in that**, when travel in a longitudinal convoy is detected, the at least one operating parameter is adapted to the behaviour of the car directly in front of the original car in order to reduce a reaction time of the driver assistance system.

3. Method according to claim 2, **characterised in that**, by adapting the operating parameter, a tighter distance control is achieved than outside a longitudinal convey, and/or a maximum permitted braking deceleration is increased, and/or faster evaluation of the current travel situation is made possible, particularly by accelerating the filtering of measured data, and/or an electronic tow bar is produced.

4. Method according to claim 2 or 3, **characterised in that** the operating parameter is adapted to obtain a faster response of actuator means addressed by the driver assistance system, particularly by eliminating or lowering jerk limits and/or by enabling a faster pressure build-up in an ESP system.

5. Method according to one of the preceding claims, **characterised in that**, when travel in a longitudinal convoy is detected, the at least one operating parameter is adapted with respect to an increase in the set time gap and/or a widening of a set time gap interval.

6. Method according to one of the preceding claims, **characterised in that** dynamic data describing the absolute and/or the relative movement of the at least two cars travelling in front and of the original car are evaluated as environmental data.

7. Method according to claim 6, **characterised in that** cases in which the change in speed over time of the original car and of the at least two cars travelling in front is between a predefined minimum value and a predefined maximum value, and/or the reaction times of the cars correspond to one another within a tolerance range, and/or the deceleration of the cars within the convoy decreases, and/or there is an imminent threat of cancellation of the function of the driver assistance system, are regarded as conditions for travelling in a longitudinal-guidance convoy.

8. Method according to one of the preceding claims, **characterised in that** signals from at least one radar sensor associated with the driver assistance system, received as environmental data, indicating the presence of other longitudinal-guidance driver assistance systems with radar sensors, are evaluated, particularly by high frequency analysis.

9. Method according to one of the preceding claims, **characterised in that** communication data of a communication system configured to communicate with other motor cars are evaluated as environmental data.

10. Method according to one of the preceding claims, **characterised in that** image data from a camera associated in particular with the driver assistance system are evaluated as environmental data, particularly with respect to the illumination of brake lights of at least one car travelling in front.

11. Motor car (1), comprising a longitudinal-guidance driver assistance system (2) having a controller (3) with means for performing a method according to one of the preceding claims.

## Revendications

1. Procédé de commande d'un système d'assistance au conducteur en guidage longitudinal d'un véhicule automobile, en particulier d'un système ACC,
**caractérisé en ce que** :
des données ambiantes du véhicule automobile sont exploitées dans le cadre d'un convoi se déplaçant en guidage longitudinal avec au moins trois véhicules automobiles comprenant le véhicule automobile et au moins deux autres véhicules automobiles se déplaçant directement l'un derrière l'autre et présentant respectivement un système d'assistance au conducteur actif en guidage longitudinal pour obtenir une valeur de convoi, dans lequel on vérifie si au moins deux véhicules automobiles précédant directement le véhicule automobile présentent eux-mêmes un système d'assistance au conducteur actif en guidage longitudinal et dans lequel au moins un paramètre de service du système d'assistance au conducteur est directement ajusté en fonction de la valeur de convoi.

2. Procédé selon la revendication 1,
**caractérisé en ce que** :
dans un convoi en guidage longitudinal établi, le au moins un paramètre de service est ajusté sur le comportement du véhicule automobile précédant directement le véhicule automobile pour réduire le temps de réaction du système d'assistance au conducteur.

3. Procédé selon la revendication 2,
**caractérisé en ce que** :
l'ajustement du paramètre de service fait qu'il se produit un écartement plus rigide qu'à l'extérieur d'un convoi en guidage longitudinal et/ou que la décélération de freinage maximale autorisée est augmentée et/ou qu'une évaluation plus rapide de la situation de conduite courante est permise, en particulier par une accélération du filtrage de données de mesure, et/ou qu'un timon électronique est réalisé.

4. Procédé selon la revendication 2 ou la revendication 3,
**caractérisé en ce que** :
le paramètre de service est ajusté eu égard à une réaction plus rapide d'une commande du système d'assistance au conducteur, en particulier par suppression ou réduction des limitations arrière et/ou en autorisant une montée en pression plus rapide dans un système EPS.

5. Procédé selon l'une quelconque des revendications précédentes,
**caractérisé en ce que** :
dans un convoi en guidage longitudinal établi, le au moins un paramètre de service est ajusté eu égard à une augmentation des intervalles de temps réglés et/ou à une extension d'un intervalle de temps réglé.

6. Procédé selon l'une quelconque des revendications précédentes,
**caractérisé en ce que** :
l'on exploite comme données ambiantes les données dynamiques décrivant le déplacement absolu et/ou le déplacement relatif des au moins deux véhicules automobiles précédents et du véhicule proprement dit.

7. Procédé selon la revendication 6,
**caractérisé en ce que** :
l'on considère comme condition pour la réalisation d'un convoi les cas où le changement de vitesse dans le temps du véhicule automobile propre et des au moins deux autres véhicules précédents se situe entre une valeur minimale prédéterminée et une valeur maximale prédéterminée et/ou dans lequel les temps de réaction des véhicules automobiles se correspondent dans une plage de tolérances et/ou la décélération des véhicules automobiles au sein du convoi diminue et/ou un dégagement imminent du fonctionnement du système d'assistance au conducteur est en vue.

8. Procédé selon l'une quelconque des revendications précédentes,
**caractérisé en ce que** :
l'on exploite comme données ambiantes des signaux reçus au moins d'un capteur de radar affecté au système d'assistance au conducteur sur la présence d'autres systèmes d'assistance au conducteur en guidage longitudinal avec des capteurs de radar, en particulier au moyen d'une analyse de hautes fréquences.

9. Procédé selon l'une quelconque des revendications précédentes,
**caractérisé en ce que** :
l'on exploite comme données ambiantes des données de communication d'un dispositif de communication conformé pour communiquer avec d'autres véhicules automobiles.

10. Procédé selon l'une quelconque des revendications précédentes,
**caractérisé en ce que** :
l'on exploite comme données ambiantes des données d'images d'une caméra affectée en particulier au système d'assistance au conducteur, en particulier eu égard à l'éclairage de feux de freinage d'au moins un véhicule automobile précédent.

11. Véhicule automobile (1) comprenant un système d'assistance au conducteur (2) avec un appareil de commande (3) doté de moyens pour réaliser le procédé selon l'une quelconque des revendications précédentes.
